# EUROPEAN PATENT SPECIFICATION

(11) **EP 3 101 200 B1**
(45) Date of publication and mention of the grant of the patent: **11.09.2019**
(21) Application number: 15739866.0
(22) Date of filing: 20.01.2015
(51) Int. Cl.: E04H 9/14

(54) **SHELTER FOR TSUNAMIS AND OTHER DISASTERS**
SCHUTZRAUM FÜR TSUNAMIS UND ANDERE KATASTROPHEN
ABRI CONTRE LES TSUNAMIS ET AUTRES SINISTRES

(30) Priority: 27.01.2014 JP 2014011981
(43) Date of publication of application: 07.12.2016
(73) Proprietor: Asano, Hideki, Tokyo 144-0053 (JP); Araki, Itsuo, Sendai-shi, Miyagi 989-3127 (JP); Ouchi, Teruo, Higashimurayama-gun, Yamagata 990-0301 (JP)
(72) Inventor: Asano, Hideki, Tokyo 144-0053 (JP); Araki, Itsuo, Sendai-shi, Miyagi 989-3127 (JP); Ouchi, Teruo, Higashimurayama-gun, Yamagata 990-0301 (JP)
(74) Representative: Plougmann Vingtoft a/s
(86) International application number: PCT/JP2015/051336
(87) International publication number: WO 2015/111564

(56) References cited:
- WO-A1-2006/100698
- DE-U1-202007 006 740
- JP-A- 2012 233 306
- JP-A- 2013 234 556
- JP-A- 2013 245 545
- JP-B1- 5 255 148
- JP-U- 3 181 060
- US-B1- 6 393 776

## Description

### Technical Field

The present invention relates to disaster shelters for tsunami and other disasters.

### Background Art

As conventional tsunami shelters, there are floating type tsunami shelters, tsunami shelters which are installed underground or semi-underground, tsunami shelters which are installed on roofs, tower-shaped tsunami shelters and columnar tsunami shelters. WO2006/100698 discloses a tsunami shelter that is positioned above ground under normal conditions, but can be lowered underground at time of disaster. The floating type tsunami shelter is formed in the shape of a sphere or a ship (the shape of a lifeboat) (for example, see patent literature 1). Some of the shelters which are installed underground, the tower-shaped shelters and the columnar shelters can hold several tens to several hundreds of people but the floating type shelter in the shape of a sphere holds about 3 to 4 people, the shelter in the shape of a lifeboat holds about 20 people and the shelter which is installed semi-underground or on a roof and which is mainly used for a home holds about 3 to 4 people.

### Citation List

### Patent Literature

Patent Literature 1: Japanese Unexamined Patent Application Publication No. 2012-233306

### Summary of Invention

### Technical Problem

However, when the floating type tsunami shelter as disclosed in patent literature 1 is floated in tsunami, it is impossible to expect where it is drifted, and even when a position information transmitter is installed, in a case where it is drifted, it is extremely unlikely that people in the shelter are rescued in a timely manner, with the result that its movement is left to chance and that there is a concern about it. Disadvantageously, when torrential tsunami is encountered, the interior of the shelter is dangerously brought into a spinning state. Furthermore, disadvantageously, in the case of a shelter which holds only about 3 to 4 people, it is likely that there are some people who cannot enter the interior thereof and who are left behind in case of emergency. Furthermore, since the large-scale shelters installed underground and the tower-shaped and columnar shelters cannot be closely installed, there is disadvantageously a danger that an evacuation from a distant place and an evacuation of people who fail to escape are not performed in time. Moreover, disadvantageously, a long-term construction period from its planning to its completion is needed, its construction cost is high and its maintenance cost after the construction tends to be high.

The present invention is made with attention focused on such problems, and an object of the present invention is to provide a disaster shelter for tsunami and other disasters with which it is possible to help people who fail to escape and who are about to be drifted in tsunami such as socially vulnerable people like children, people in need of care, pregnant women and elderly people and police and fire officials who cannot escape ahead of inhabitants as a matter of duty, in which its safety is high, which can hold about several tens to several hundreds of people and in which its installation cost is lowered such that the disaster shelters for tsunami and other disasters can be closely installed. Another object is to provide the disaster shelter for tsunami and other disasters as a disaster shelter with which it is possible not only to protect people from disasters such as a tornado, a huge typhoon, a storm surge and a large-scale fire caused by an earthquake but also to protect communication infrastructure facilities and the like from those disasters. Solution to Problem

In order to achieve the above object, a disaster shelter for tsunami and other disasters according to the present invention includes: a bottom plate foundation which is provided on an installation surface; a side foundation which rises from a peripheral edge of the bottom plate foundation; and a shelter main body which is installed inside the side foundation and on an upper portion of the bottom plate foundation, where the shelter main body is fixed to the side foundation with a fixing anchor which is extended in a lateral direction so as to connect a side wall of the shelter main body and the side foundation.

In the disaster shelter for tsunami and other disasters according to the present invention, since the shelter main body is fixed to the side foundation with the fixing anchor which is extended in the horizontal direction, the shelter main body is highly resistant to a force acting in an up/down direction, and even when the water level therearound is increased by tsunami, and thus a buoyant force acts on the shelter main body, it is possible to prevent the shelter main body from being floated. Since the shelter main body is fixed with the fixing anchor from all sides, even when a force in a lateral direction is applied such as by the attack of tsunami, it is possible to prevent the shelter main body from being moved away from the side foundation so as to be turned over. As described above, the disaster shelter for tsunami and other disasters can be prevented from being drifted by tsunami, and thus the disaster shelter for tsunami and other disasters is highly safe.

In order for the disaster shelter for tsunami and other disasters according to the present invention to be prevented from sliding by a force in a lateral direction caused by tsunami or the like, the disaster shelter for tsunami and other disasters is preferably installed such that part or the whole of the side foundation is embedded in the ground. In the disaster shelter for tsunami and other disasters according to the present invention, an opening portion such as the door is preferably watertight such that water is prevented from entering the interior of the shelter main body by the attack of tsunami. The side wall and the upper portion preferably have such a strength that even when rubble or the like hits them, a hole is not made. The bottom plate foundation and the side foundation may be constructed at the installation site or may be constructed by a precast construction method.

The disaster shelter for tsunami and other disasters according to the present invention, preferably includes: an exterior member which is arranged a gap apart from the shelter main body so as to cover a side surface and an upper surface of the shelter main body; and a shock absorbing means which is fixed to the shelter main body and the exterior member and which supports the exterior member such that an impact applied to the exterior member from outside can be absorbed. In this case, even when tsunami, rubble or the like hits the exterior member covering the shelter main body, an impact applied to the exterior member can be absorbed by the shock absorbing means, with the result that it is possible to prevent the shelter main body from being damaged. In order to enhance the shock absorbing effect of the shock absorbing means, the exterior member is preferably fixed to the side surface and the upper surface of the shelter main body.

The disaster shelter for tsunami and other disasters according to the present invention preferably includes: a ventilation hole which is provided in an upper portion of the side surface of the shelter main body such that the inside and the outside of the shelter main body can be ventilated; and a ventilation valve which can open and close the ventilation hole. In this case, when the water level therearound is increased by tsunami, the ventilation valve is closed, and thus it is possible to prevent the entrance of water from the ventilation hole into the shelter main body. In normal times, the ventilation valve is opened, and thus it is possible to ventilate the interior of the shelter main body. In order to enhance the ventilation effect, a plurality of ventilation holes is preferably provided. In a configuration where the exterior member is provided, in order to enhance the ventilation effect, the ventilation hole is preferably provided so as to penetrate the exterior member.

The disaster shelter for tsunami and other disasters according to the present invention preferably includes a hood which covers the ventilation hole on the side surface of the shelter main body and whose lower portion is open. In this case, even when the water level is raised beyond the ventilation hole by tsunami, air is stored inside the hood, and thus with this air pressure, it is possible to prevent the entrance of water from inside the hood into the ventilation hole. Hence, it is possible to more effectively prevent the entrance of water into the shelter main body. Preferably, in a configuration where the exterior member is provided, the hood is attached to the side surface of the exterior member whereas in a configuration where the exterior member is not provided, the hood is attached to the side surface of the shelter main body.

The disaster shelter for tsunami and other disasters according to the present invention may include at least one of: a guard bumper which is provided a first distance apart from the exterior member so as to cover the side surface and the upper surface of the shelter main body; and a guard wall which is provided a second distance longer than the first distance apart from the exterior member so as to cover the side surface of the shelter main body and which is formed with a plurality of retaining walls. When the guard bumper is provided, with the guard bumper, it is possible to absorb or attenuate an impact from floating objects including the wave pressure of tsunami and rubble, with the result that the shelter main body can be protected from a larger external force. When the guard wall is provided, with the guard wall, it is possible to protect the shelter main body from a large floating object such as a ship.

### Advantageous Effects of Invention

According to the present invention, it is possible to provide a highly safe disaster shelter for tsunami and other disasters with which it is possible to prevent people and important facilities from being drifted by tsunami and a storm surge caused by a huge typhoon and to protect people from a tornado and a large-scale fire.

### Brief Description of Drawings

Fig. 1 is a transverse cross-sectional view of a disaster shelter for tsunami and other disasters according to an embodiment of the present invention;
Fig. 2 is a vertical cross-sectional view of the disaster shelter for tsunami and other disasters shown in Fig. 1;
Fig. 3(a) is a side view, before an impact is applied, showing a state in which the shock absorbing means of the disaster shelter for tsunami and other disasters shown in Fig. 1 is used; Fig. 3(b) is a side view, when an impact is applied, showing a state in which the shock absorbing means of the disaster shelter for tsunami and other disasters shown in Fig. 1 is used;
Fig. 4 is a transverse cross-sectional view showing a method of constructing the disaster shelter for tsunami and other disasters shown in Fig. 1; and
Fig. 5(a) is a perspective view showing an example of the installation of the disaster shelter for tsunami and other disasters according to the embodiment of the present invention including guard bumpers; Fig. 5(b) is a perspective view showing an example of the installation of the disaster shelter for tsunami and other disasters according to the embodiment of the present invention further including guard walls.

### Description of Embodiments

An embodiment of the present invention will be described below with reference to drawings.

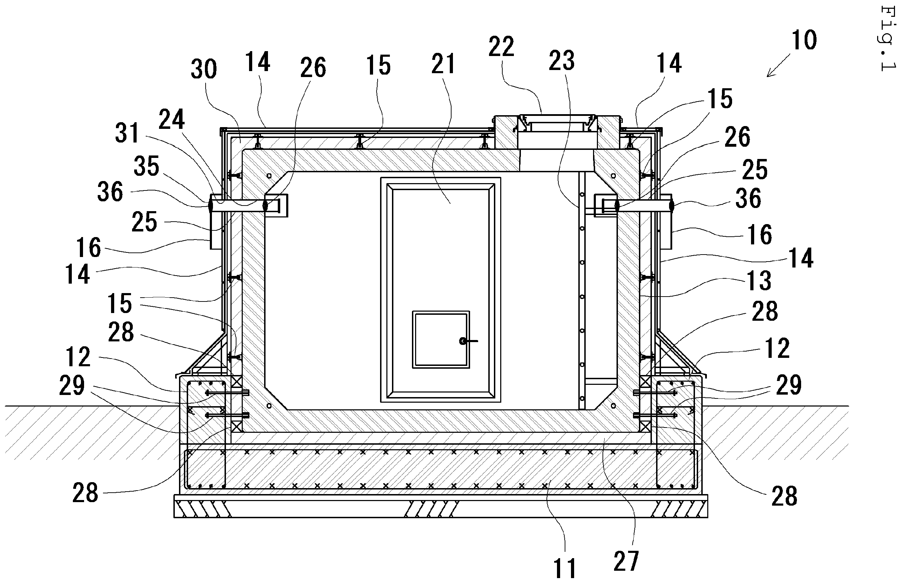

Figs. 1 to 5 show a disaster shelter for tsunami and other disasters according to the embodiment of the present invention.

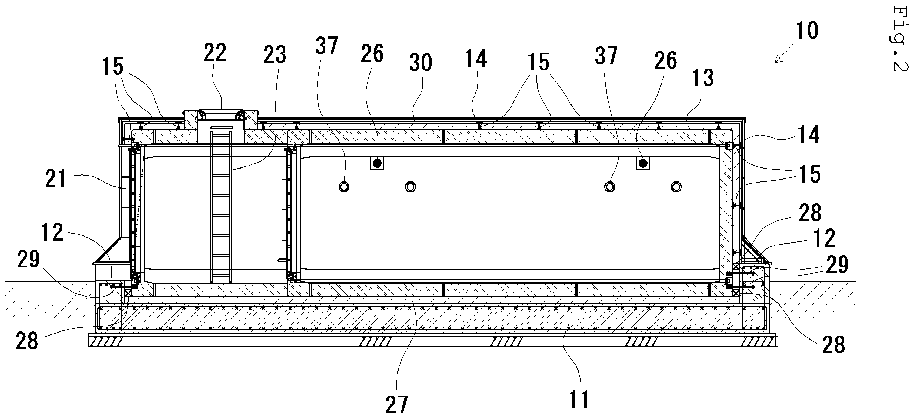

As shown in Figs. 1 and 2, the disaster shelter for tsunami and other disasters 10 includes a bottom plate foundation 11, a side foundation 12, a shelter main body 13, an exterior member 14, a shock absorbing means 15 and a hood 16.

The bottom plate foundation 11 is made of reinforced concrete and is installed on an installation surface. The bottom plate foundation 11 is formed to be slightly larger than the bottom surface of the shelter main body 13 on which the bottom plate foundation 11 is installed. The installation surface is formed by drilling the ground so as to be horizontally flat. The side foundation 12 is made of reinforced concrete and rises, along the peripheral edge of the bottom plate foundation 11, vertically from the peripheral edge, and is extended upward. The side foundation 12 is provided integrally with the bottom plate foundation 11 with a reinforcing iron bar which is provided so as to connect the side foundation 12 and the bottom plate foundation 11. The side foundation 12 may have such a size that its inner side is a gap apart from the side surface of the shelter main body 13 or can have such a size that the inner side is not a gap apart therefrom.

The shelter main body 13 is divided into a plurality of rooms which have a watertight structure for preventing the entrance of water, and has a high-strength structure which is highly resistant to an impact from the outside. The shelter main body 13 includes a watertight double door 21 for exit and entrance from the side which is formed with an outside door and an inside door, a watertight hatch 22 for exit and entrance from the top and a ladder 23 for stepping down from the hatch 22 onto the floor. The shelter main body 13 has, in an upper portion of the side surface, a plurality of watertight windows 37 for checking the outside. The shelter main body 13 can store, therewithin, items for disasters such as water and emergency food.

The shelter main body 13 has, in the upper portion of the side surface, a plurality of ventilation holes 24 which can ventilate the inside and outside of the shelter main body 13, a plurality of ventilation tubes 25 which are attached to the ventilation holes 24 and a plurality of ventilation valves 26 which can open and close the ventilation tubes 25. When the ventilation valves 26 are closed, the entrance of a fluid from the outside of the shelter main body 13 is prevented whereas when the ventilation valves 26 are opened, the fluid is passed in both directions.

The shelter main body 13 is installed inside the side foundation 12 and on the upper portion of the bottom plate foundation 11, and its lower portion other than the portion of the watertight door 21 is surrounded by the side foundation 12. When the shelter main body 13 is arranged a gap apart from each of the side foundation 12 and the bottom plate foundation 11, a urethane-like insulation material 27 is put into the gap whereas when the shelter main body 13 is arranged without a gap, it is fixed as it is. When the gap is provided, in the shelter main body 13, a hardwood 28 for filling the gap is inserted into the gap from the side foundation 12 so as to prevent sliding in a lateral direction. The shelter main body 13 is fixed to the side foundation 12 with a fixing anchor 29 which is extended in a lateral direction, especially in a horizontal direction so as to connect the sidewall and the side foundation 12 in the shelter main body 13. A large number of fixing anchors 29 are spaced a predetermined distance apart so as to surround the shelter main body 13, and are attached so as to fix the shelter main body 13 from all sides.

The exterior member 14 is formed with an incombustible siding plate or a highly heat-resistant tile member, and is provided so as to rise upward from the upper portion of the side foundation 12 and to cover, from the outside, the side surface and the upper surface of the shelter main body 13 fixed to the side foundation 12 other than the portions of the door 21 and the hatch 22. The exterior member 14 is fixed to the upper portion of the side foundation 12. The exterior member 14 is arranged a gap apart from each of the side surface and the upper surface of the shelter main body 13, and a urethane-like insulation material 30 is put into the gap. The exterior member 14 has a plurality of through holes 31 which communicate with the ventilation holes 24, and the ventilation tubes 25 are attached so as to penetrate the through holes 31 to the outside.

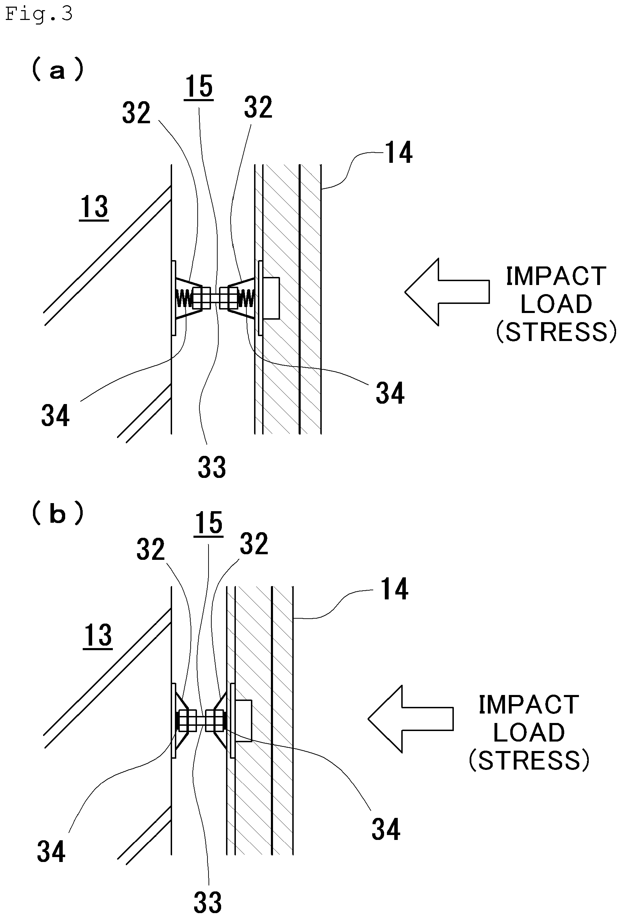

The shock absorbing means 15 is fixed to the shelter main body 13 and the exterior member 14, and supports the exterior member 14 such that the shock absorbing means 15 can absorb an impact applied to the exterior member 14 from the outside. A large number of shock absorbing means 15 are spaced a predetermined distance apart in the gap between the exterior member 14 and the side surface and the upper surface of the shelter main body 13. As shown in Fig. 3, the shock absorbing means 15 includes a pair of support cones 32, a support bolt 33 and a pair of springs 34. The pair of support cones 32 are attached to the inner wall of the exterior member 14 and the outer wall of the shelter main body 13 so as to be opposite each other. The support bolt 33 penetrates the vertexes of the support cones 32, and is provided between the inner wall of the exterior member 14 and the outer wall of the shelter main body 13 a distance apart thereform so as to couple the support cones 32 together. The pair of springs 34 are extendably provided along the direction of the length of the support bolt 33 so as to connect one end surface of the support bolt 33 and the inner wall of the exterior member 14 and to connect the other end surface of the support bolt 33 and the outer wall of the shelter main body 13.

As shown in Fig. 3(b), when an impact load (stress) is applied to the exterior member 14, the shock absorbing means 15 absorbs the stress by the contraction of the springs 34 to the elastic limit and further absorbs the stress by the destruction of the support cones 32. In this way, the shock absorbing means 15 can absorb the impact applied by the exterior member 14 to the shelter main body 13.

A plurality of hoods 16 are provided so as to correspond to the ventilation tubes 25. Each of the hoods 16 is attached from the outside to the side surface of the exterior member 14 so as to cover an opening on the external side of the ventilation tube 25 which is attached through the exterior member 14. The hood 16 is provided so as to be put over the opening of the ventilation tube 25, and covers the front, the top and both sides of the ventilation tube 25, and the lower portion thereof is open. The hood 16 has an air hole 35 which can ventilate the inside and the outside of the shelter main body 13 and an air valve 36 which can open and close the air hole 35. When the air valve 36 is closed, the entrance of a fluid from the outside of the hood 16 is prevented whereas when the air valve 36 is opened, the fluid is passed in both directions.

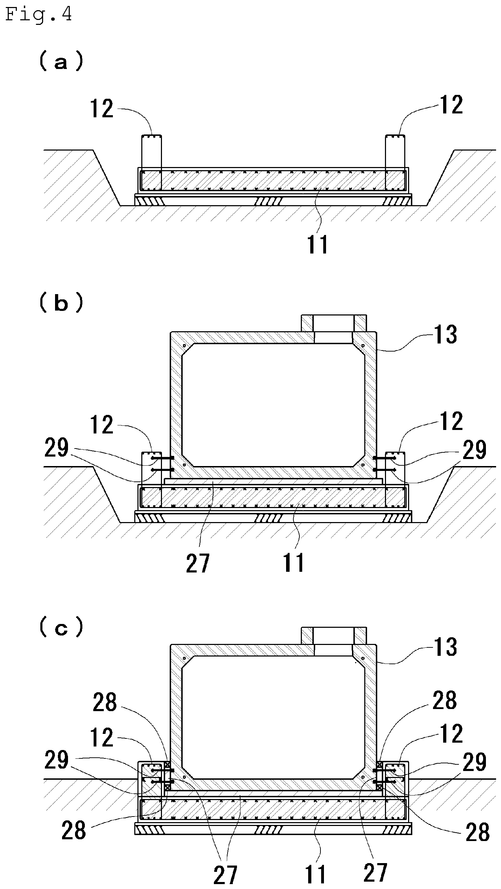

The disaster shelter for tsunami and other disasters 10 can be installed as follows. First, as shown in Fig. 4(a), the ground in an installation position is drilled to form a horizontal installation surface. On the installation surface, the bottom plate foundation 11 is formed, and furthermore, the reinforcing iron bar of the side foundation 12 is provided integrally with the bottom plate foundation 11. Then, as shown in Fig. 4(b), when the gap is provided between the bottom plate foundation 11 and the shelter main body 13, the insulation material 27 is put over the bottom plate foundation 11, the shelter main body 13 is placed thereon and the reinforcing iron bar of the side foundation 12 and the shelter main body 13 are fixed together with the fixing anchor 29. Then, as shown in Fig. 4(c), the hardwood 28 for preventing sliding and the insulation material 27 are inserted into the gap between the side foundation 12 and the shelter main body 13, and the concrete for the side foundation 12 is provided by being hit. When no gap is provided between the bottom plate foundation 11 and the shelter main body 13, the reinforcing iron bar of the side foundation 12 and the shelter main body 13 are fixed together with the fixing anchor 29 without being processed. The ground around the side foundation 12 is backfilled. Thereafter, the exterior member 14, the shock absorbing means 15, the hood 16 and the like are attached.

The action will then be described.

In the disaster shelter for tsunami and other disasters 10, when only the shelter main body 13 is in water, it can be considered to be brought into an unstable state by a buoyant force, and hence in order to prevent such a problem, the weights of the bottom plate foundation 11 and the side foundation 12 are added to cope with the buoyant force, with the result that a stable state can be maintained. Since the shelter main body 13 is fixed to the side foundation 12 with the fixing anchor 29 which is extended in the horizontal direction, the shelter main body 13 is highly resistant to a force acting in an up/down direction, and even when the water level therearound is increased by tsunami, and thus a buoyant force acts on the shelter main body 13, it is possible to prevent the shelter main body 13 from being floated. Since the shelter main body 13 is fixed with the fixing anchor 29 from all sides, even when a force in a lateral direction is applied such as by the attack of tsunami, it is possible to prevent the shelter main body 13 from being moved away from the side foundation 12 so as to be turned over. As described above, the disaster shelter for tsunami and other disasters 10 can be prevented from being drifted by tsunami, and thus the disaster shelter for tsunami and other disasters 10 is highly safe.

In the disaster shelter for tsunami and other disasters 10, even when tsunami, rubble or the like hits the exterior member 14 covering the shelter main body 13, an impact applied to the exterior member 14 can be absorbed by the shock absorbing means 15, with the result that it is possible to prevent the shelter main body 13 from being damaged. Since the shelter main body 13 has a high-strength structure which is highly resistant to an impact from the outside, and is highly watertight, the external wall and the ceiling thereof are not easily damaged, with the result that it is possible to prevent the entrance of water.

In the disaster shelter for tsunami and other disasters 10, even when the water level is raised by tsunami beyond the opening of the ventilation tubes 25, the ventilation valves 26 are closed, and thus it is possible to prevent the entrance of water from the ventilation holes 24 into the shelter main body 13. Here, since air is stored inside the hood 16, it is possible to prevent the entrance of water from inside the hood 16 into the ventilation tubes 25, with the result that the entrance of water into the shelter main body 13 is prevented together with the ventilation valves 26 by two ways. When water is drawn but the water level is not lowered beyond the opening of the hood 16 or when the opening of the hood 16 is blocked by mud, rubble or the like, the air valve 36 is opened together with the ventilation valves 26, and thus it is possible to ventilate the interior of the shelter main body 13. In normal times, the ventilation valves 26 are opened, and thus it is possible to ventilate the interior of the shelter main body 13.

Depending on the situation, in the disaster shelter for tsunami and other disasters 10, the ventilation valves 26 and the air valve 36 are preferably operated as follows. In normal times, the ventilation valves 26 are opened so that the interior of the shelter main body 13 is ventilated. Although the air valve 36 is preferably closed, it may be opened. When it is likely that the water level is raised by tsunami beyond the opening of the ventilation tubes 25, the ventilation valves 26 and the air valve 36 are closed so that the entrance of water is prevented. When water is drawn but the water level is not lowered beyond the opening of the hood 16 or when the opening of the hood 16 is blocked by mud, rubble or the like, the ventilation valves 26 and the air valve 36 are opened so as to ventilate the interior of the shelter main body 13.

As described above, the disaster shelter for tsunami and other disasters 10 is a type that is installed on the ground and that people can quickly enter for evacuation, and thus it is possible to save as many people failing to escape as possible. A PC concrete box is utilized for the shelter main body 13, and thus it takes only about three weeks to complete installation work after manufacturing at a factory, with the result that it is possible to achieve the rapid installation. It is also possible to protect evacuees from intense cold, intense heat, fire and the spill of oil and dangerous drug. Even when the disaster shelter for tsunami and other disasters 10 is completely hermetically sealed, the disaster shelter for tsunami and other disasters 10 can be designed such that a planned number of people held therein can survive for 72 hours. In normal times, the disaster shelter for tsunami and other disasters 10 can be utilized as a disaster prevention stockpile warehouse or the like.

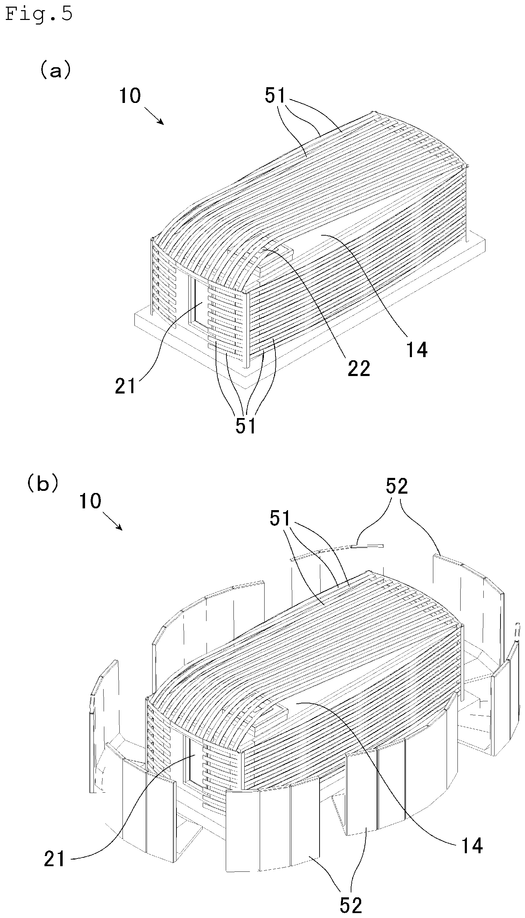

As shown in Fig. 5(a), the disaster shelter for tsunami and other disasters 10 may include guard bumpers 51 which are spaced a predetermined distance apart between the shelter main body 13 and the exterior member 14 and which are provided so as to cover the side surface and the upper surface of the shelter main body 13. In this case, with the guard bumpers 51, it is possible to absorb or attenuate an impact from floating objects including the wave pressure of tsunami and rubble, with the result that the shelter main body 13 can be protected from a larger external force together with the action of the shock absorbing means 15.

The guard bumper 51 is preferably formed with a hollow belt-shaped member whose cross section is formed in the shape of the letter C or in the shape of a rectangle and whose width is about several to several tens of centimeters. Although its material is preferably a composite resin material such as a GFRP or a CFRP which is lightweight and which is elastically deformed, it may be an extruded material of a light alloy such as aluminum or bamboo (pole, half). When a resin basic material is used, the finish of the material may be the basic material as it is or may be colored. When a resin material or a light alloy material is used, the surface is coated to reproduce a pattern such as wood grain or a design or the surface layer may be finished with a film (sheet) material.

The guard bumpers 51 may also be provided on the front surface of the door 21. In this case, an effect of preventing the door from being blocked with floating objects and thereby acquiring a space for an escape is expected. The guard bumpers 51 may be attached parallel to the exterior member 14 or may be attached in the shape of an arch which is shown in Fig. 5(a) and which is swollen outward so as to cope with strong stress. When the guard bumpers 51 are attached, the guard bumpers 51 are preferably attached with support rods set up on four corners and an intermediate part or with a support member protruded from the exterior member 14. The support member is preferably the same as the shock absorbing means 15 so as to further enhance shock absorbing power while compensating for the retention force of the guard bumpers 51.

As the form of the attachment of the guard bumpers 51, blind covering (overlapping by striking attachment without any gap) may be adopted or see-through covering (the provision of gaps of the width of the bumper or less to width of the bumper or more) as shown in Fig. 5(a) may be adopted. The see-through covering is preferably adopted with consideration given to the fact that it is easy for people who is drifted by tsunami to hold the bumpers and the fact that a handhold can be provided when people who escape into the hatch 22 climb the bumpers).

When a large installation site is provided, and it is expected that a large floating object such as a ship is encountered, as shown in Fig. 5(b), the disaster shelter for tsunami and other disasters 10 may have, outside the guard bumpers 51, guard walls 52 which are installed so as to surround the side surface of the shelter main body 13 and which are formed with a plurality of L-shaped retaining walls. In this case, with the guard walls 52, it is possible to protect the shelter main body 13 from a large floating object such as a ship. In particular, the guard walls 52 are preferably provided in front of the front surface of the door 21 so that large floating objects such as ships are prevented from directly hitting the door 21 serving as a doorway.

The planar shape of the guard wall 52 may be rectangular or may be trapezoidal as shown in Fig. 5(b). When the planar shape is trapezoidal, a plurality of guard walls 52 are aligned, and thus it is possible to increase the resistance to stress. The material of the guard wall 52 may be made of concrete which is robust or may be a material which has a structure obtained by combining a steel material and a panel. When the material is made of concrete, the guard wall 52 may be precast (PC) which is manufactured at a plant or may be constructed at the installation site. Here, the guard wall 52 may be constructed together with the main body or may be constructed afterward. In the case of the structure obtained by combining a steel material and a panel, for example, the steel material may be formed of a truss material or the like, and the panel may be formed with a honeycomb core or the like made of steel or FRP.

The guard wall 52 may be reinforced by the provision of a haunch or a support member serving as a support at both ends or at an intermediate part of the L-shaped wall. The guard wall 52 may be installed independently of the bottom plate foundation 11 and the side foundation 12 or may be securely connected to the bottom plate foundation 11 and the side foundation 12. When the guard wall 52 is installed independently of the bottom plate foundation 11 and the side foundation 12, it is possible to obtain an effect in which even when an impact is received from a large floating object, the impact is stopped by the foundation while being absorbed. When the guard wall 52 is securely connected to the bottom plate foundation 11 and the side foundation 12, the guard wall 52 is substantially structured integrally with the bottom plate foundation 11 and the side foundation 12, and thus the overall weight thereof is increased, with the result that it is possible to achieve a robust structure.

The disaster shelter for tsunami and other disasters 10 can instead be used for disasters other than tsunami, and can be utilized, for example, as a shelter for a typhoon or a storm surge or a tornado shelter. The disaster shelter for tsunami and other disasters 10 can be utilized not only for saving people but also for protecting infrastructure facilities such as communication facilities at the time of emergency.

### Reference Signs List

- 10: disaster shelter for tsunami and other disasters
- 11: bottom plate foundation
- 12: side foundation
- 13: shelter main body
- 21: door
- 22: hatch
- 23: ladder
- 24: ventilation hole
- 25: ventilation tube
- 26: ventilation valve
- 27: insulation material
- 28: hardwood
- 29: fixing anchor
- 37: window
- 14: exterior member
- 30: insulation material
- 31: through hole
- 15: shock absorbing means
- 32: support cone
- 33: support bolt
- 34: spring
- 16: hood
- 35: air hole
- 36: air valve
- 51: guard bumper
- 52: guard wall

## Claims

1. A disaster shelter (10) for tsunami and other disasters, comprising:
a bottom plate foundation (11) which is provided on an installation surface;
a side foundation (12) which rises from a peripheral edge of the bottom plate foundation (11);
a shelter main body (13) which is installed inside the side foundation (12) and on an upper portion of the bottom plate foundation (11), **characterised in that** the shelter main body (13) is fixed to the side foundation (12) with a fixing anchor (29) which is extended in a lateral direction so as to connect a side wall of the shelter main body (13) and the side foundation (12).

2. The disaster shelter (10) for tsunami and other disasters according to claim 1, comprising:
an exterior member (14) which is arranged a gap apart from the shelter main body (13) so as to cover a side surface and an upper surface of the shelter main body; and
a shock absorbing means (15) which is fixed to the shelter main body (13) and the exterior member (14) and which supports the exterior member (14) such that an impact applied to the exterior member (14) from outside can be absorbed.

3. The disaster shelter (10) for tsunami and other disasters according to claim 1 or 2, comprising:
a ventilation hole (24) which is provided in an upper portion of the side surface of the shelter main body (13) such that an inside and an outside of the shelter main body (13) can be ventilated; and
a ventilation valve (26) which can open and close the ventilation hole (24).

4. The disaster shelter (10) for tsunami and other disasters according to claim 3, comprising:
a hood (16) which covers the ventilation hole (24) on the side surface of the shelter main body (13) and whose lower portion is open.

5. The disaster shelter (10) for tsunami and other disasters according to any one of claims 2 to 4, comprising at least one of:
a guard bumper (51) which is provided a first distance apart from the exterior member (14) so as to cover the side surface and the upper surface of the shelter main body (13); and
a guard wall (52) which is provided a second distance longer than the first distance apart from the exterior member (14) so as to cover the side surface of the shelter main body (13) and which is formed with a plurality of retaining walls.

## Patentansprüche

1. Katastrophenunterschlupf (10) für Tsunami und andere Katastrophen, umfassend:
ein Bodenplattenfundament (11), das auf einer Installationsfläche bereitgestellt ist;
ein Seitenfundament (12), das von einem umlaufenden Rand des Bodenplattenfundaments (11) ansteigt;
einen Unterschlupfhauptkörper (13), der innerhalb des Seitenfundaments (12) auf einem oberen Abschnitt des Bodenplattenfundaments (11) installiert ist, **dadurch gekennzeichnet, dass**
der Unterschlupfhauptkörper (13) an dem Seitenfundament (12) mit einem Fixieranker (29) fixiert ist, das sich in einer seitlichen Richtung erstreckt, um so eine Seitenwand des Unterschlupfhauptkörpers (13) und das Seitenfundament (12) zu verbinden.

2. Katastrophenunterschlupf (10) für Tsunami und andere Katastrophen nach Anspruch 1, umfassend:
ein äußeres Element (14), das einen Zwischenraum von dem Unterschlupfhauptkörper (13) beabstandet angeordnet ist, um so eine Seitenfläche und eine obere Fläche des Unterschlupfhauptkörpers abzudecken; und
ein Schockabsorptionsmittel (15), das an dem Unterschlupfhauptkörper (13) und dem äußeren Element (14) fixiert ist und das das äußere Element (14) stützt, sodass ein Schlag, der auf das äußere Element (14) von außen wirkt, absorbiert werden kann.

3. Katastrophenunterschlupf (10) für Tsunami und andere Katastrophen nach Anspruch 1 oder 2, umfassend:
ein Belüftungsloch (24), das in einem oberen Abschnitt der Seitenfläche des Unterschlupfhauptkörpers (13) bereitgestellt ist, sodass ein Inneres und ein Äußeres des Unterschlupfhauptkörpers (13) belüftet werden können; und
ein Belüftungsventil (26), das das Belüftungsloch (24) öffnen und schließen kann.

4. Katastrophenunterschlupf (10) für Tsunami und andere Katastrophen nach Anspruch 3, umfassend:
eine Haube (16), die das Belüftungsloch (24) an den Seitenflächen des Unterschlupfhauptkörpers (13) abdeckt und deren unterer Abschnitt offen ist.

5. Katastrophenunterschlupf (10) für Tsunami und andere Katastrophen nach einem der Ansprüche 2 bis 4, umfassend zumindest eines der Folgenden:
einen Schutzpuffer (51), der einen ersten Abstand von dem äußeren Element (14) beabstandet angeordnet ist, um so die Seitenfläche und die obere Fläche des Unterschlupfhauptkörpers (13) abzudecken; und
eine Schutzwand (52), die einen zweiten Abstand, der länger als der erste Abstand ist, von dem äußeren Element (14) beabstandet angeordnet ist, um so die Seitenfläche des Unterschlupfhauptkörpers (13) abzudecken, und die mit einer Vielzahl von Haltewänden gebildet ist.

## Revendications

1. Abri (10) contre les sinistres pour tsunami et autres sinistres, comprenant :
une fondation à plaque inférieure (11) qui est disposée sur une surface d'installation ;
une fondation latérale (12) qui s'élève à partir d'un bord périphérique de la fondation à plaque inférieure (11) ;
un corps principal (13) d'abri qui est installé à l'intérieur de la fondation latérale (12) et sur une partie supérieure de la fondation à plaque inférieure (11), **caractérisé en ce que**
le corps principal (13) d'abri est fixé à la fondation latérale (12) à l'aide d'un ancrage de fixation (29) qui s'étend selon une direction latérale de façon à raccorder une paroi latérale du corps principal (13) d'abri et la fondation latérale (12).

2. Abri (10) contre les sinistres pour tsunami et autres sinistres selon la revendication 1, comprenant :
un élément extérieur (14) qui est agencé avec un écart par rapport au corps principal (13) d'abri de façon à recouvrir une surface latérale et une surface supérieure du corps principal d'abri ; et
un moyen d'absorption de choc (15) qui est fixé au corps principal (13) d'abri et à l'élément extérieur (14) et qui supporte l'élément extérieur (14) de sorte qu'un choc appliqué à l'élément extérieur (14) provenant de l'extérieur puisse être absorbé.

3. Abri (10) contre les sinistres pour tsunami et autres sinistres selon la revendication 1 ou 2, comprenant :
un orifice de ventilation (24) qui est disposé dans une partie supérieure de la surface latérale du corps principal (13) d'abri de sorte qu'un intérieur et un extérieur du corps principal (13) d'abri puissent être ventilés ; et
une soupape de ventilation (26) pouvant ouvrir et fermer l'orifice de ventilation (24).

4. Abri (10) contre les sinistres pour tsunami et autres sinistres selon la revendication 3, comprenant :
un capot (16) qui recouvre l'orifice de ventilation (24) sur la surface latérale du corps principal (13) d'abri et dont la partie inférieure est ouverte.

5. Abri (10) contre les sinistres pour tsunami et autres sinistres selon l'une quelconque des revendications 2 à 4, comprenant au moins l'une de :
un pare-chocs de protection (51) qui est disposé à une première distance par rapport à l'élément extérieur (14) de façon à recouvrir la surface latérale et la surface supérieure du corps principal (13) d'abri ; et
une paroi de protection (52) qui est disposée à une seconde distance plus longue que la première distance par rapport à l'élément extérieur (14) de façon à couvrir la surface latérale du corps principal (13) d'abri et qui est formée d'une pluralité de parois de retenue.
